# EUROPÄISCHE PATENTSCHRIFT

(11) **EP 4 054 292 B1**
(45) Veröffentlichungstag und Bekanntmachung des Hinweises auf die Patenterteilung: **07.01.2026**
(21) Anmeldenummer: 22157265.4
(22) Anmeldetag: 17.02.2022
(51) Int. Cl.: H05B 6/14, B23P 11/02

(54) **GERÄT ZU EINER WÄRMEBEHANDLUNG**
HEAT TREATMENT APPARATUS
DISPOSITIF DESTINÉ AU TRAITEMENT THERMIQUE

(30) Priorität: 05.03.2021 DE 102021105345; 07.12.2021 DE 102021132211
(43) Veröffentlichungstag der Anmeldung: 07.09.2022
(73) Patentinhaber: Franz Haimer Maschinenbau KG, 86568 Hollenbach-Igenhausen (DE)
(72) Erfinder: Haimer, Franz, 86568 Hollenbach-Igenhausen (DE)
(74) Vertreter: Schwarz, Wolfgang

(56) Entgegenhaltungen:
- EP-A1- 1 750 485
- EP-B1- 2 116 104
- EP-B1- 2 346 642
- WO-A1-2020/048970
- DE-A1- 102018 121 883

## Beschreibung

Die Erfindung betrifft ein Gerät zu einer Wärmebehandlung, insbesondere zu einem induktiven Erwärmen oder einem Kühlen, von Schrumpffuttern für Schaftwerkzeuge, insbesondere ein Schrumpfgerät oder ein Kühlgerät oder ein Schrumpfgerät mit Kühlgerät (für Schrumpffutter). Die Erfindung betrifft weiter ein Verfahren zum Betreiben eines solchen Geräts.

Ein derartiges Gerät zu einer Wärmebehandlung von Schrumpffuttern, in diesem Fall ein Schrumpfgerät, ist aus der DE 10 2012 216 186 A1 bekannt. Dieses Schrumpfgerät sieht eine eine Manteltemperatur bzw. Oberflächentemperatur eines Schrumpffutters berührungslos erfassende sensorische Temperatur-Messeinrichtung, hier ein Strahlungs-/IR-Thermometer, vor, die bzw. das stationär in Entfernung am Schrumpfgerät positioniert ist. Zur Temperaturmessung muss allerdings eine Induktionsspulenanordnung des Schrumpfgeräts außer Eingriffsweite mit dem Schrumpffutter verfahren werden, so dass die Schrumpffutteroberfläche durch den Sensor abtastbar ist. Eine Temperaturmessung während eines Erwärmungsvorgangs ist somit nicht möglich.

Verbesserung hierzu soll ein weiteres derartiges Schrumpfgerät mit einer Induktionsspulenanordnung und einer berührungslos erfassenden sensorischen Temperatur-Messeinrichtung schaffen, welches aus der DE 10 2018 121 883 A1 bekannt ist. Bei diesem Schrumpfgerät ist vorgesehen, dass die Induktionsspulenanordnung von einem Messkanal durchsetzt ist, welcher in eine Aufnahmeöffnung für die Aufnahme eines Schrumpffutters mündet. Weiter sieht das Schrumpfgerät dann vor, dass die berührungslos erfassende sensorische Temperatur-Messeinrichtung einen Temperatursensor, hier ebenfalls ein Strahlungsthermometer, für die Erfassung der Manteltemperatur des Schrumpffutters aufweist, welcher in diesen Messkanal eingreift.

Aus der EP 2 116 104 B1 ist wieder ein weiteres derartiges Schrumpfgerät mit einer Induktionsspulenanordnung und mit einer berührungslos erfassenden sensorischen Temperatur-Messeinrichtung bekannt, wobei in diesem Fall bei der berührungslos erfassenden sensorischen Temperatur-Messeinrichtung zwei berührungslos erfassenden sensorische Temperatursensoren, nämlich zwei Infrarot-Temperatursensoren, vorgesehen sind.

Diese hier im genannten Stand der Technik verwendeten Strahlungsthermometer (zur berührungslosen Temperaturmessung bei den Schrumpffuttern) arbeiten auf Basis von vom Körper emittierter infraroter Strahlung/Wärmestrahlung (wie die hier von einem Schrumpffutter emittierter infraroter Strahlung/Wärmestrahlung).

Jeder Körper bzw. jedes Objekt sendet eine seiner Oberflächentemperatur entsprechende Menge infraroter Strahlung bzw. Wärmestrahlung aus (, welche mit einem Strahlungsthermometer erfasst und ausgewertet wird). Die Intensität der infraroten Strahlung/Wärmestrahlung ändert sich dabei abhängig von der Objekttemperatur.

Darüber hinaus ist die Intensität der Infrarotstrahlung/Wärmestrahlung "realer Körper" aber auch material- bzw. oberflächenabhängig. D.h., (reale) Körper strahlen eine um einen material-/oberflächenabhängigen Faktor geringere Intensität ab - als ideale Wärmestrahler, d.h., ideale "Schwarze Strahler". Dieser Faktor ist als "Emissionsgrad ε" bekannt.

Für eine berührungslose Temperaturmessung muss man so, will man Temperaturen individueller Körper exakt messen, den (in dividuellen) Emissionsgrad ε, also die Wärmeabstrahlfähigkeit, des jeweiligen Körpers kennen.

Genau dieses erweist sich nachteilig bei den bekannten Schrumpfgeräten mit dortig verwendetem Strahlungsthermometer, wo an (vielen unterschiedlichen) realen Körpern, d.h. den Schrumpffuttern, - mit in der Praxis unbekannten Emissionsgraden ε - die Temperatur gemessen werden soll.

Meist ist deshalb das verwendete Strahlungsthermometer auf einen bestimmten Emissionsgrad ε voreingestellt (bzw. kalibriert). D.h., die exakte Temperaturmessung kann nur für einen ganz bestimmten Körper ganz bestimmten Materials/Oberfläche erfolgen (nämlich für den Körper, dessen Material/Oberfläche genau den voreingestellten Emissionsgrad ε aufweist), was zu Messfehlern bei allen anderen zu messenden Körpern (bzw. Schrumpffuttern) - mit anderen abweichenden Emissionsgraden ε - führt.

Es ist Aufgabe der Erfindung, die im Stand der Technik bekannten Schrumpfgeräte, im Allgemeinen bekannte Geräte zu einer Wärmebehandlung von Schrumpffuttern, hinsichtlich ihrer Temperaturmessung an den zu behandelnden Schrumpffuttern zu verbessern und (dadurch) eine zuverlässige Wärmebehandlung, insbesondere ein Erwärmen oder Kühlen von Schrumpffuttern, - bei hoher Sicherheit und einfacher Handhabung - zu gewährleisten.

Diese Aufgabe wird gelöst durch ein Gerät zu einer Wärmebehandlung, insbesondere zu einem induktiven Erwärmen oder einem Kühlen, von Schrumpffuttern sowie ein Verfahren zum Betreiben eines solchen Geräts mit den Merkmalen des jeweiligen unabhängigen Anspruchs.

Vorteilhafte Weiterbildungen der Erfindung sind Gegenstand abhängiger Ansprüche sowie der nachfolgenden Beschreibung - und beziehen sich sowohl auf das Gerät bzw. die Geräte wie auch auf das Verfahren.

Verwendete Begriffe, wie oben, unten, vorne, hinten, links oder rechts sind - soweit nicht anders explizit definiert - nach üblichen Verständnis zu verstehen. Begriffe, wie radial und axial, sind in Bezug auf eine Mittelachse des Geräts zu verstehen.

Der Begriff "im Wesentlichen" - soweit verwendet - kann (nach höchstrichterlichem Verständnis) dahingehend verstanden werden, dass mit ihm von "einem praktisch noch erheblichen Maße" die Rede ist. Durch diese Begrifflichkeit so implizierte, mögliche Abweichungen vom Exakten, können sich so ohne Absicht (also ohne funktionale Begründung) aufgrund von Fertigungs- oder Montagetoleranzen o.ä. ergeben.

Das Gerät zu einer Wärmebehandlung, insbesondere zu einem induktiven Erwärmen oder einem Kühlen, von Schrumpffuttern für Schaftwerkzeuge, insbesondere ein Schrumpfgerät oder ein Kühlgerät oder ein Schrumpfgerät mit Kühlgerät (für Schrumpffutter), weist eine - einen Aufnahmebereich für ein Schrumpffutter bildende - Aufnahmeeinrichtung, insbesondere eine Aufnahmeöffnung, zum Aufnehmen des Schrumpffutters, eine die Aufnahmeeinrichtung bzw. den Aufnahmebereich bezüglich einer Mittelachse, insbesondere konzentrisch, umschließenden Wärmebehandlungseinheit, insbesondere eine Induktionsspulenanordnung oder eine Kühleinheit, und eine Messeinheit zur, insbesondere berührungslosen, Temperaturmessung des Schrumpffutters auf.

Eine solche, bevorzugt berührungslos messende, Temperatur-Messeinheit kann beispielsweise eine Messeinheit sein, welche auf (Wärme-)Strahlungsmessung bei Körpern basiert. D.h., eine solche, bevorzugt berührungslos messende, Temperatur-Messeinheit kann beispielsweise einen Strahlungssensor, wie beispielsweise bei einem Pyrometer, aufweisen.

Weiterhin ist bei dem erfindungsgemäßen Gerät vorgesehen, dass die Messeinheit mehrere um die Aufnahmeeinrichtung bzw. den Aufnahmebereich herum angeordnete Temperatursensoren - oder zumindest einen um die Aufnahmeeinrichtung bzw. Aufnahmebereich herum angeordneten, bezüglich der Mittelachse schräggestellten Temperatursensor zur, insbesondere berührungslosen, Erfassung einer Manteltemperatur bzw. Oberflächentemperatur eines in der Aufnahmeeinrichtung/in dem Aufnahmebereich angeordneten Schrumpffutters aufweist, beispielsweise einen Strahlungssensor bzw. Strahlungssensoren oder ein Pyrometer mit einem Strahlungssensor bzw. Pyrometer mit Strahlungssensoren.

Anders ausgedrückt, zweckmäßig ist es, wenn die mehreren Temperatursensoren jeweils und/oder der schräggestellte Temperatursensor als Strahlungsdetektor, insbesondere als Pyrometer mit einem Strahlungsdetektor zur Erfassung einer Wärmestrahlung von einem in der Aufnahmeeinrichtung angeordneten Schrumpffutter, ausgebildet sind.

Dabei kann der zumindest eine schräggestellte Temperatursensor auch einer von den mehreren um die Aufnahmeeinrichtung bzw. Aufnahmebereich herum angeordneten Temperaursensoren sein.

Vorzugsweise beträgt ein Schrägstellungswinkel des schräggestellten Temperatursensors zwischen 30° und 60°, insbesondere 45°.

Durch Schrägstellung des Sensors lässt sich, insbesondere in einem Bereich, in dem man messen und/oder die Oberflächentemperatur überwachen möchte, beispielsweise im Bereich von 50°C - 70°C, die Oberfläche besser durch einen Emissionsgrad ε erfassen.

Darüber hinaus lässt sich durch Schrägstellung des Temperatursensors ein größerer erfassbarer, durch den Temperatursensor überwachbarer Bereich realisieren.

Insbesondere kann es auch zweckmäßig sein, wenn zumindest einer der mehreren Temperatursensoren und/oder der schräggestellte Temperatursensor eine Fokussiervorrichtung und/oder eine Abschirmeinrichtung, insbesondere eine Blende, vorsieht.

Dadurch bzw. durch eine solche Fokussiereinrichtung und/oder Abschirmeinrichtung kann erreicht werden, dass der Temperatursensor unempfindlich(-er) gegenüber Störstrahlung, **z.B.** von einem nahe bei dem Temperatursensor angeordneten, Wärmestrahlung abgebenden Gerät, beispielsweise ein Schrumpfgerät, wird. Auf zusätzliche Abschirmungen für den Temperatursensor kann so gegebenenfalls verzichtet werden.

Bevorzugt kann dann hier weiter vorgesehen sein, dass zumindest zwei, insbesondere viele oder auch alle, dieser mehreren Temperatursensoren gemeinsam zur Manteltemperatur- bzw. Oberflächentemperaturmessung eines in der Aufnahmeeinrichtung/in dem Aufnahmebereich angeordneten Schrumpffutters herangezogen werden.

Herangezogen kann insbesondere meinen, dass eine resultierende Manteltemperatur- bzw. Oberflächentemperatur unter Verwendung der zumindest zwei, insbesondere vielen oder auch allen Temperatursensoren bzw. deren Messungen/Messwerten ermittelt wird. Ein erster einfachster Ansatz diesbezüglich könnte sein, dass ein Mittelwert aus den zumindest zwei, insbesondere vielen oder auch allen Temperatursensoren bzw. deren Messungen/Messwerten als resultierende Manteltemperatur bestimmt wird. Dabei können auch die einzelnen Temperatursensoren bzw. deren Messungen/Messwerten jeweils individuell gewichtet werden.

Weiter ist hier auch vorgesehen, dass zumindest zwei, insbesondere viele oder auch alle, von den Temperatursensoren unterschiedliche Konfigurationen/Messeinstellungen aufweisen.

Unter "unterschiedliche Konfigurationen/Messeinstellungen" (bei den Temperatursensoren) wird verstanden, dass die Temperatursensoren unterschiedlich kalibriert sind, beispielsweise für/auf unterschiedliche Materialien/Oberflächen von Schrumpffuttern (bzw. unterschiedliche Emissionsgrade ε). Auch kann gemeint sein, dass die Temperatursensoren Messbereiche in unterschiedlichen Wellenlängenbereichen aufweisen (vgl. Quotientenpyrometer).

Alternativ ist bei dem erfindungsgemäßen Gerät auch vorgesehen, dass die Messeinheit mehrere um die Aufnahmeeinrichtung bzw. den Aufnahmebereich herum angeordnete Sensoren aufweist, wobei zumindest ein erster davon ein Temperatursensor zur, insbesondere berührungslosen, Erfassung einer Manteltemperatur eines in der Aufnahmeeinrichtung/in dem Aufnahmebereich angeordneten Schrumpffutters ist, beispielsweise ein Strahlungssensor oder ein Pyrometer mit Strahlungssensor (s. oben), und mindestens ein zweiter davon ein andersartiger Sensor zur Erfassung einer anderen Eigenschaft des in der Aufnahmeeinrichtung/in dem Aufnahmebereich angeordneten Schrumpffutters ist.

Dabei kann der zumindest eine schräggestellte Sensor auch dieser zumindest eine erste Temperatursensor sein, der mit dem zumindest einen zweiten andersartigen Sensor kombiniert wird.

Auch der zumindest eine erste Temperatursensor kann eine Fokussiereinrichtung und/oder Abschirmeinrichtung aufweisen.

Bevorzugt kann der mindestens eine zweite andersartige Sensor ein, insbesondere berührungslos messender, Abstandssensor oder Reflexionssensor, insbesondere ein optischer Sensor oder ein Ultraschallsensor oder ein Lasersensor oder ein Infrarot-(Reflexions-)Sensor, sein.

Abstandssensoren, auch als Positionssensoren, Wegsensoren, Wegaufnehmer oder Distanzsensoren bezeichnet, messen einen Abstand zwischen dem Sensor und einem Objekt. Mit den Abstandssensoren können Größen wie Abstand, Distanz, Weg und Position gemessen werden. Die Änderung des Abstands wird vom Sensor bzw. von einem Sensor-Controller in ein elektrisches Signal umgewandelt, welches - gegebenenfalls über verschiedene Schnittstellen - an ein Steuergerät ausgegeben werden kann.

Mit einem Reflexionssensor wird die An- oder Abwesenheit eines Objekts überprüft, indem die Lichtreflexion am Objekt gemessen wird.

Die Temperaturmessung kann verbessert werden, wenn mehrere von dem ersten Temperatursensor und/oder mehrere von dem zweiten andersartigen Sensor um die Aufnahmeeinrichtung/um den Aufnahmebereich herum angeordnet sind. Dabei können auch die mehreren zweiten andersartigen Sensoren auch wieder andersartig untereinander sein, beispielsweise ein Abstandssensor kombiniert mit einem Reflexionssensor.

Weiter kann auch hier vorgesehen sein, dass - im Fall von mehreren von dem ersten Temperatursensor - zumindest zwei, insbesondere viele oder auch alle, von dem ersten Temperatursensor unterschiedliche Konfigurationen/Messeinstellungen aufweisen.

Das Signal ein und desselben Strahlungssensors kann - alternativ zum Fall mehrerer Strahlungssensoren - auf unterschiedliche Art ausgewertet werden, z. B. unter Zugrundelegung unterschiedlicher Emissionsgrade ε, anstatt mehrere Temperatursensoren mit unterschiedlichen Konfigurationen/Messeinstellungen zu verwenden.

Bevorzugt kann dann auch weiter vorgesehen sein, dass zumindest der mindestens eine erste Temperatursensor und der mindestens eine zweite andersartige Sensor, insbesondere - im Fall jeweils mehrerer von diesen - mehrere, viele oder auch alle von diesem ersten Temperatursensor und von diesem zweiten andersartigen Sensor zur Manteltemperatur- bzw. Oberflächentemperaturmessung eines in der Aufnahmeeinrichtung/in dem Aufnahmebereich angeordneten Schrumpffutters herangezogen werden.

Weiterbildend kann auch vorgesehen werden, dass die Sensoren kreisförmig (gegebenenfalls gruppenweise auf verschiedenen Kreisen) zur Mittelachse und/oder auf unterschiedlicher axialer Höhe zur Mittelachse bei der bzw. um die Aufnahmeeinrichtung/Aufnahmebereich (herum) angeordnet sind. Dieses kann bei gleichmäßiger Teilung - oder auch mit ungleichmäßiger Teilung ausgeführt sein.

Dabei kann auch vorgesehen sein, dass jeder Sensor individuell an seiner vorbestimmten Position, beispielsweise in oder an der Wärmebehandlungseinheit - oder an einem Gehäuse dieser, befestigt ist, - oder, dass eine gemeinsame Haltevorrichtung, wie beispielsweise eine die Aufnahmeeinrichtung/den Aufnahmebereich zumindest teilweise umschließende ringförmige Baueinheit(Messring), vorgesehen ist, welche bzw. welcher die Sensoren aufnimmt - und welche bzw. welcher dann ihrerseits in dem Gerät bzw. in oder an der Wärmebehandlungseinheit/- gehäuse verbaut ist.

Bevorzugt kann dabei die im Wesentlichen ringförmige Baueinheit bzw. der Messring koaxial zu der Mittelachse bei dem Gerät, insbesondere axial benachbart zu der Wärmebehandlungseinheit, insbesondere der Induktionsspulenanordnung oder der Kühleinheit, angeordnet sein.

Zweckmäßig kann es auch sein, wenn gleichartige von den Sensoren benachbart in der im Wesentlichen ringförmigen Baueinheit angeordnet sind, beispielsweise in (Kreis-)Sektoren "gebündelt". So können beispielsweise die Temperatursensoren benachbart zueinander in einem Kreissektor der im Wesentlichen ringförmigen Baueinheit bzw. des Messrings angeordnet sein.

Auch kann weiterbildend vorgesehen werden, dass die Wärmebehandlungseinheit zumindest eine oder mehrere Unterbrechungen, beispielsweise in den durch die Aufnahmeeinheit gebildeten Aufnahmebereich mündende, insbesondere radiale, (Mess- )Kanäle, aufweist bzw. von solchen durchsetzt ist.

Im Fall einer Induktionsspulenanordnung als Wärmebehandlungseinheit kann es insbesondere zweckmäßig sein, wenn um die Kanäle - unter Freihaltung der jeweiligen Unterbrechung bzw. des jeweiligen Kanals - eine Spulenwicklung der Induktionsspulenanordnung gewickelt ist.

In einem solchen (Mess-)Kanal bzw. zumindest teilweise in einem solchen Messkanal und/oder an einem solchen (Mess-)Kanal kann dann ein Sensor, wie ein Temperatursensor, angeordnet bzw. eingesetzt sein - und zwar derart, dass er durch den Messkanal hindurch misst.

Ist der Sensor darüber hinaus auch noch außerhalb eines Gehäuses der Wärmebehandlungseinheit angeordnet, so ist es zweckmäßig, wenn das Gehäuse einen entsprechenden Durchbruch für den Sensor (zum Hindurchmessen des Sensors) vorsieht.

Insbesondere ist es - messtechnisch - zweckmäßig, wenn ein solcher Messkanal im Wesentlichen radial zur Mittelachse durch die Wärmebehandlungseinheit und/oder deren Gehäuse hindurch verläuft.

Weiterbildend kann auch vorgesehen sein, dass ein solcher Messkanal in einem axialen Zentralbereich der Induktionsspulenanordnung vorzugsweise in etwa mittig zwischen deren axialen Enden angeordnet ist.

Weiterhin erweist es sich als zweckmäßig, wenn in einen solchen Messkanal ein, insbesondere für Wärmestrahlung durchlässiges, vorzugsweise auswechselbares Schutzfenster insbesondere zum Schutz des Sensors vor Verunreinigungen und/oder Beschädigungen eingesetzt ist.

Auch kann diesbezüglich alternativ oder ergänzend - zu den umwickelten (Mess-)Kanälen - vorgesehen sein, dass - im Fall von einer Induktionsspulenanordnung als Wärmebehandlungseinheit - die Induktionsspulenanordnung zwei oder mehrere beabstandete Teilspulen aufweist, wobei dann dort in den Abständen zwischen den Teilspulen ein bzw. die Sensoren - entsprechend der Kanalanordnung - angeordnet sind (und hindurchmessen können). Entsprechendes kann auch bei einer Kühleinheit - mit Teileinheiten als Wärmebehandlungseinheit vorgesehen sein.

Ferner kann die Messwertübertragung von den Temperatursensoren kabelgebunden - oder auch kabellos zu einer Rechen- und/oder Steuereinheit erfolgen.

Zweckmäßig, insbesondere für eine berührungslose Temperaturmessung, erweist sich, wenn die mehreren von dem Temperatursensor jeweils als berührungslos messende Strahlungsdetektoren/-sensoren bzw. als Pyrometer mit einem Strahlungsdetektor/-sensor (zur Erfassung einer Wärmestrahlung von einem in der Aufnahmeöffnung angeordneten Schrumpffutter) ausgebildet sind.

Bevorzugt kann bei dem Gerät auch eine Berechnungseinheit zur Ermittlung einer bzw. der resultierenden Manteltemperatur eines in der Aufnahmeeinrichtung/Aufnahmebereich angeordneten Schrumpffutters, vorgesehen sein, die derart eingerichtet ist, dass die resultierende Manteltemperatur unter Verwendung der Sensoren ermittelbar ist, insbesondere unter Verwendung von von mehreren Temperatursensoren erfassten Manteltemperaturen des in der Aufnahmeeinrichtung angeordneten Schrumpffutters.

Zweckmäßig ist es auch, wenn das Gerät mit einer Steuereinheit ausgebildet ist. Diese Steuereinheit kann insbesondere zur Steuerung der Wärmebehandlungseinheit, wie der Induktionsspulenanordnung oder der Kühleinheit, dienen, beispielsweise derart, dass die Steuereinheit eine Leistung der Wärmebehandlungseinheit, beispielsweise eine Stromzufuhr der Induktionsspulenanordnung, in Abhängigkeit der unter Verwendung der Sensoren ermittelten Manteltemperatur steuert.

Ferner kann es auch zweckmäßig sein, wenn das Gerät eine Anzeigeeinrichtung zur Anzeige eines Wärmezustands, insbesondere einer in der Aufnahmeeinrichtung/in dem Aufnahmebereich angeordneten Werkzeugaufnahme, insbesondere eines Schrumpffutters, aufweist. Dies können beispielsweise Farbdioden sein. Unterschiedliche Farben können unterschiedliche Wärmezustände anzeigen.

Der Erfindung liegt - ausgehend von dem Problem unterschiedlicher und unbekannter Emissionsgrade ε bei einer Mehrzahl von zu "Temperatur-messenden" Schrumpffuttern - die Überlegung zugrunde, dass der Einfluss des Emissionsgrades ε (, welcher vom Material und/oder der Oberfläche eines jeweiligen Schrumpffutters abhängt,) bei Verwendung von bzw. bei Temperaturmessung durch mehrere Sensoren, insbesondere mehrere Temperatursensoren oder unterschiedlicher Sensoren, eliminiert bzw. herausgerechnet (beispielsweise mathematisch gekürzt) werden kann - und damit die Temperaturmessung unabhängig vom jeweiligen Emissionsgrad ε wird bzw. dessen Kenntnis nicht mehr notwendig ist.

Bei einem einzigen (Strahlungs-)Sensor für die Temperaturmessung wäre das Wissen über den spezifischen Emissionsgrades ε des jeweiligen Schrumpffutters (für eine exakte Temperaturmessung/-bestimmung) notwendig - und der (Strahlungs-)Sensor müsste jeweils individuell für diesen Emissionsgrad ε eingestellt sein bzw. der (Strahlungs-)Sensor müsste auf das jeweilige Schrumpffutter individuell kalibriert werden. Dieses entfällt so bei erfindungsgemäß mehreren Temperatursensoren.

Diese Erkenntnis macht sich auch ein alternatives erfindungsgemäßes Gerät - zu einer Wärmebehandlung, insbesondere zu einem induktiven Erwärmen oder einem Kühlen, von Schrumpffuttern für Schaftwerkzeuge, insbesondere ein Schrumpfgerät oder ein Kühlgerät oder ein Schrumpfgerät mit Kühlgerät, mit einer - einen Aufnahmebereich bildenden - Aufnahmeeinrichtung, insbesondere einer Aufnahmeöffnung, zum Aufnehmen eines Schrumpffutters, einer die Aufnahmeeinrichtung bezüglich einer Mittelachse, insbesondere konzentrisch, umschließenden Wärmebehandlungseinheit, insbesondere einer Induktionsspulenanordnung oder einer Kühleinheit, und einer Messeinheit zur, insbesondere berührungslosen, Temperaturmessung des Schrumpffutters, zu eigen, welches vorsieht, dass die Messeinheit einen Quotientenpyrometer aufweist.

Quotientenpyrometer (auch Zweifarben- oder Verhältnispyrometer genannt) werden zwei (Strahlungs-)Detektoren verwendet, die beide auf verschiedenen - aber meist dicht zusammenliegenden - Wellenlängen arbeiten, und auf dasselbe Ziel ausgerichtet sind.

Verhältnispyrometer deshalb, denn setzt man - bei einem Körper gemessene - zwei Strahlungsdichten verschiedener Wellenlänge zu einem Quotienten Q ins "Verhältnis", so eliminiert sich der Emissionsgrad ε (d.h., man kann ihn kürzen) und es bleibt nur mehr ein Ausdruck abhängig von der Temperatur übrig. Diese Abhängigkeit kann man zum Beispiel aus einer Kalibration am Schwarzkörper erhalten. Nun kann man Temperaturen messen, ohne den Emissionsgrad ε zu kennen.

Bevorzugt kann der Quotientenpyrometer auch mit allen zuvor beschriebenen Merkmalen, insbesondere soweit sie sich auf Temperatursensoren beziehen lassen und/oder mit solchen Merkmalen kombinierbar sind, ausgebildet sein.

Insbesondere kann auch hier vorgesehen sein, dass die Wärmebehandlungseinheit einen Messkanal - mit allen auch den vorbeschriebenen weiterbildenden Merkmalen, - aufweist, in dem bzw. an dem der Quotientenpyrometer angeordnet ist - und durch welchen der Quotientenpyrometer hindurch misst.

Auch die die im Wesentlichen ringförmige Baueinheit bzw. der Messring kann mit dem Quotientenpyrometer ausgestattet sein.

Bei dem Verfahren zum Betreiben eines erfindungsgemäßen Geräts, insbesondere zu einem induktiven Aufheizen von einem Schrumpffutter oder einem Kühlen von einem Schrumpffutter, wird eine resultierende Manteltemperatur eines in der Aufnahmeöffnung bzw. in dem Aufnahmebereich angeordneten Schrumpffutters dann unter Verwendung der mehreren Sensoren ermittelt, insbesondere unter Verwendung von von den mehreren Temperatursensoren erfassten Manteltemperaturen des in der Aufnahmeöffnung/Aufnahmebereich angeordneten Schrumpffutters.

Dies kann beispielsweise derart passieren, dass die Temperatursensoren unterschiedliche Konfigurationen/Messeinstellungen aufweisen, wie, dass sie unterschiedlich kalibriert sind, beispielsweise für/auf unterschiedliche Materialien/Oberflächen von Schrumpffuttern (bzw. unterschiedliche Emissionsgrade ε), oder, dass die Temperatursensoren Messbereiche in unterschiedlichen Wellenlängenbereichen aufweisen (vgl. Quotientenpyrometer), und dann aus den von den mehreren Temperatursensoren ermittelten Messungen/- werten die resultierende Manteltemperatur bestimmt wird.

Anders ausgedrückt, es kann vorgesehen sein, dass bei mehreren Temperatursensoren unterschiedliche Kalibrierungen/Settings, insbesondere unterschiedliche Emissionsgrade ε eingestellt sind oder werden, und Messungen der mehreren Temperatursensoren verglichen und/oder gemeinsam verarbeitet werden und daraus die resultierende Manteltemperatur bestimmt wird.

Mathematisch kann sich dabei insbesondere von Vorteil erweisen, dass - setzt man die Messungen der mehreren Temperatursensoren ins Verhältnis - der Emissionsgrad ε eliminierbar ist.

Dies kann beispielsweise auch derart passieren, dass unter Verwendung einer Messung des andersartigen zweiten Sensors eine Kalibrierung/Setting oder Einstellung bei zumindest einem Temperatursensor durchgeführt wird oder dass unter Verwendung einer Messung des andersartigen zweiten Sensors bestimmt wird, wie die resultierende Manteltemperatur, insbesondere aus den Messungen von mehreren Temperatursensoren, bestimmt wird.

Beispielshaft wäre dies insbesondere so möglich, dass mittels eines Reflexionssensors, welcher mit der Messung aus einem Abstandssensor korrigiert wird, durch Reflexionsmessung ermittelt wird, welche Oberfläche(-nfarbe) das Schrumpffutter hat. In Abhängigkeit davon können dann (a) Voreinstellungen bei den bzw. bei einem Temperatursensor getroffen und dann mit diesem gemessen werden oder (b) die Messungen bei mehreren voreingestellten Temperatursensoren entsprechen bearbeitet werden.

Es konnte aber auch überraschend beobachtet werden, dass das Emissionsverhalten innerhalb enger Temperaturgrenzen und in bestimmten Frequenzbereichen bei verschiedenen Oberflächenbeschaffenheiten nur geringe Unterschiede aufweist. Dadurch wird es möglich, die Temperatur innerhalb dieser Temperaturgrenzen mit einem einzelnen geeigneten Sensor, z.B. dem Temperatursensor bzw. dem Pyrometer, insbesondere den einen schräggestellten Sensor, der in einem günstigen Frequenzbereich arbeitet, unabhängig von der Oberflächenbeschaffenheit des Schrumpffutters mit hinreichender Genauigkeit zu messen.

Bevorzugt kann das Betreiben des Schrumpfgeräts darin bestehen, dass ein Schrumpffutter in der von einer als Induktionsspulenanordnung ausgebildeten Wärmebehandlungseinrichtung umschlossenen Aufnahmeeinrichtung induktiv erwärmt und dadurch aufgeweitet wird und dass unter Verwendung der resultierenden Manteltemperatur der Erwärmungsvorgang kontrolliert wird. Oder dass ein Schrumpffutter in der von einer als Kühleinheit ausgebildeten Wärmebehandlungseinrichtung umschlossenen Aufnahmeeinrichtung gekühlt und dass unter Verwendung der resultierenden Manteltemperatur der Kühlvorgang kontrolliert wird.

Dieses Kontrollieren kann beispielsweise dadurch geschehen, dass eine Stromzufuhr zu der Wärmebehandlungseinheit in Abhängigkeit der resultierenden Manteltemperatur verändert bzw. angepasst und/oder gesteuert wird.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein. Ferner sind die Wörter "ein" bzw. "eine" nicht als Zahlwörter, sondern als unbestimmte Artikel zu verstehen.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele der Erfindung, die im Zusammenhang mit der bzw. den Zeichnungen/Figuren näher erläutert werden (gleiche Bauteile/Komponenten und Funktionen weisen in den Zeichnungen/Figuren gleiche Bezugszeichen auf).

Die Ausführungsbeispiele dienen der Erläuterung der Erfindung und beschränken die Erfindung nicht auf darin angegebene Kombinationen von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einem beliebigen der Ansprüche kombiniert werden.

Es zeigen:
- FIG 1: ein Schrumpfgerät mit einer mit mehreren berührungslos messenden Temperatursensoren bestückte Induktionsspulenanordnung gemäß einer Ausführung;

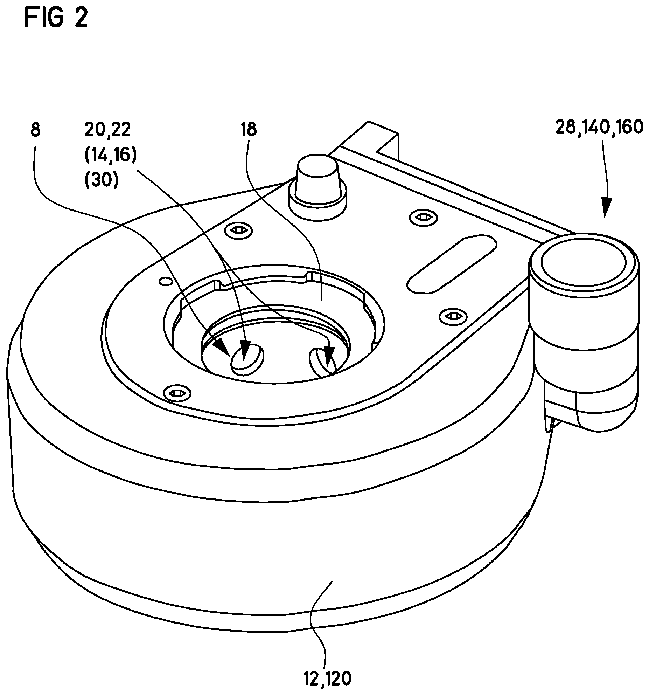

- FIG 2: die Induktionsspulenanordnung des Schrumpfgeräts nach FIG 1 in perspektivischer Darstellung;
- FIG 3: einen Radialschnitt durch die Induktionsspulenanordnung des Schrumpfgeräts nach FIG 1;
- FIG 4: einen Axialschnitt durch die Induktionsspulenanordnung des Schrumpfgeräts nach FIG 1;
- FIG 5: ein Schrumpfgerät mit Kühlgerät und mit in das Kühlgerät integrierten Messring gemäß einer Ausführung in perspektivischer Darstellung;
- FIG 6: das Schrumpfgerät mit Kühlgerät und mit dem in das Kühlgerät integrierten Messring nach FIG 5 in Seitendarstellung;
- FIG 7: der Messring des Schrumpfgeräts nach FIG 5 in perspektivischer Darstellung;
- FIG 8: eine schematische Darstellung der Funktionsweise des Messrings des Schrumpfgeräts nach FIG 5;
- FIGen 9, 9b: ein weiterer Messring in zwei Darstellungen.

### - Schrumpfgerät mit berührungsloser Temperaturmessung (FIGen 1 bis 4)

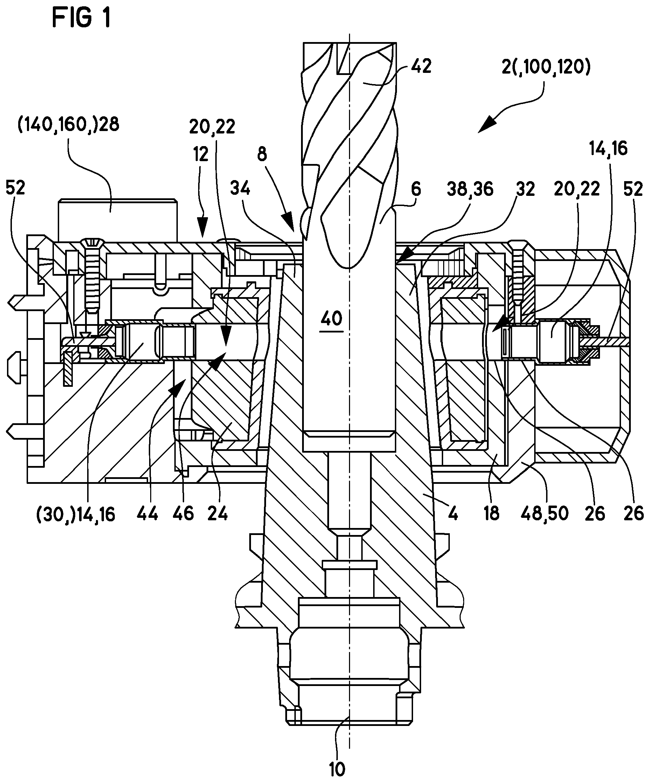

FIG 1 zeigt ein Schrumpfgerät 2 zum Ein- bzw. Ausschrumpfen 120 von Schaftwerkzeugen 6 bzw. (gezeigt) von einem Fräswerkzeug 6 in bzw. aus einem Schrumpffutter 4 mit einer mit mehreren berührungslos messenden Temperatursensoren 16 bestückten Induktionsspulenanordnung 12.

FIGen 2 bis 4 zeigen die Induktionsspulenanordnung 12 in verschiedenen Darstellen/Schnitten im Detail.

Das Schrumpfgerät 4 weist, wie FIG 1 zeigt, zum Zwecke des Ein- bzw. Ausschrumpfen 120 die - längs ihrer Spulenachse 10 verschiebbare - Induktionsspulenanordnung 12 zum induktiven Erwärmen 120 des Schrumpffutters 4 (vgl. insbesondere FIGen 2 bis 4) und eine (schematisch dargestellte) Kontroll-/Steuereinheit 28 zur Vorgangs- bzw. Erwärmungskontrolle 160 bei dem Schrumpffutter 4 auf.

Das - in diesem Fall in FIG 1 dargestellte - Schrumpffutter 4 umfasst als Hülsenpartie 32 einen zylindrisch hohlen Spannbereich 34, der über eine Stirnöffnung 36 am vorderen Stirnende 38 des Schrumpffutters 4 zum Einführen des Werkzeug- bzw. Fräserschafts 40 zugänglich ist.

Der Spannbereich 34 des Schrumpffutters 4 besitzt einen etwas geringeren Nenndurchmesser als der Werkzeugschaft 40, so dass dieser in an sich bekannter Weise durch (induktives) Erwärmen 120 des Schrumpffutters 4 klemmend einspannbar ist. Im eingeschrumpften Zustand wird der Werkzeug- bzw. Fräserschaft 40 zur Übertragung eines Drehmoments auf den vorderen Arbeitsabschnitt 42 des Rotationswerkzeugs 6 reibschlüssig im Presssitz drehfest gehalten.

Zum Ausschrumpfen wird ebenfalls nur das Schrumpffutter 4 einseitig erwärmt 120, bis die thermische Ausdehnung den Werkzeug- bzw. Fräserschaft 40 wieder zur Entnahme freigibt.

Die Induktionsspulenanordnung 12 umschließt - wie hier die FIGen 1 bis 4 zeigen - konzentrisch um ihre Spulenachse 10 - eine Aufnahmeöffnung 8 für das Schrumpffutter 4.

Durch axiales Verschieben der Induktionsspulenanordnung 12 - längs ihrer Spulenachse 10 - wird das Schrumpffutter 4 - in Bezug auf die Induktionsspulenanordnung 12 - in die gewünschte Erwärmungs-/Aufheizposition gebracht (vgl. FIG 1). Dazu können auch Anschlagelemente, beispielsweise eine Polscheibe, an der Induktionsspulenanordnung vorgesehen sein.

Um ein elektromagnetisches Wechselfeld zu erzeugen, enthält, wie insbesondere den FIGen 1, 3 und 4 entnehmbar ist, die Induktionsspulenanordnung 12 eine Spulenwicklung 24 in einem Spulengehäuse 18.

Um die Manteltemperatur des Schrumpffutters 4 beim Erwärmen 120 erfassen zu können, ist die Induktionsspulenanordnung 12 von mehreren, in diesem Fall sechs, jeweils in die Aufnahmeöffnung 8 mündenden Messkanälen 22 radial bezüglich der Spulenachse 10 durchsetzt.

Dabei sind die - sechs - Messkanäle 22, wie die FIGen 3 und 4 zeigen, - bei annähernd gleicher Teilung um die Spulenachse 10 herum - auf gleicher axialer Höhe bezüglich der Spulenachse 10 in einem axialen Zentralbereich 44 der Induktionsspulenanordnung 12 - zwischen deren axialen Enden - angeordnet, wobei die Spulenwicklung 24 unter Freihaltung der sechs Messkanäle 22 um diese herumgewickelt ist. Der spulenseitige innere Abschnitt 46 des jeweiligen Messkanals 22 fluchtet mit einem Durchbruch 26 in der Außenwand 48 des Induktionsspulengehäuses 50 (so auch insgesamt sechs Durchbrüche in der Außenwand 48 des Induktionsspulengehäuses 50).

In jeden der - sechs - Durchbrüche 26 des Induktionsspulengehäuses 50 ist je ein berührungslos messender Temperatursensor 16, hier ein (berührungslos) Wärmestrahlung messender Strahlungsdetektor 16 bzw. Pyrometer 16, eingesetzt, der durch "seinen jeweiligen" Messkanal 22 in der Spulenwicklung 24 hindurch von dem Schrumpffutter 4 emittierte Wärmestrahlung erfasst.

Die Kontrolleinheit 28 ist eingangsseitig mit den Temperatursensoren 16 mittels Kabeln 52 gekoppelt - und enthält so deren Messsignale, welche in der Kontrolleinheit 28 gemeinsam zu einer resultierenden Mantel-/Oberflächentemperatur des zu messenden Schrumpffutters 4 verarbeiten werden 140. Nach erstem und einfachem Ansatz erfolgt dies beispielsweise durch Mittelwertbildung. Überschreitet so beispielsweise die ermittelte resultierende Mantel-/Oberflächentemperatur des zu messenden Schrumpffutters eine vorgegebene Solltemperatur, wird die Erwärmungsleistung der Induktionsspulenanordnung heruntergefahren 160.

Dadurch kann während des Erwärmens 120 des Schrumpffutters 4 - auf Basis der ermittelten resultierenden Manteltemperatur - eine Temperaturkontrolle erfolgen, beispielsweise in der Form, dass - mittels einer Kontrolleinheit 28 - die Stromzufuhr zu der Induktionsspulenanordnung in Abhängigkeit von der resultierenden Manteltemperatur beeinflusst wird 160.

### - Schrumpfgerät mit berührungsloser Temperaturmessung mittels eines Quotientenpyrometers (vgl. FIGen 1 bis 4)

Die FIGen 1 bis 4 zeigen auch - als Abwandlung angedeutet durch das Bezugszeichen 30 (in Klammern), "Quotientenpyrometer", - ein alternatives Schrumpfgerät 2 zum Ein- bzw. Ausschrumpfen 120 von Schaftwerkzeugen 6 bzw. (gezeigt) von einem Fräswerkzeug 6 in bzw. aus einem Schrumpffutter 4 - mit in diesem abgewandelten Fall - einer mit einem Quotientenpyrometer 30 bestückten Induktionsspulenanordnung 12.

Diese Ausführung des alternativen Schrumpfgerätes unterscheidet sich alleine dahingehend von der vorherigen Ausführung, wie in den FIGen 1 bis 4 gezeigt, dass - anstelle der in/an den sechs Messkanälen 22 sitzenden bzw. durch sie hindurchmessenden - sechs Temperatursensoren/Strahlungsdetektoren 16 - ein einziges Quotientenpyrometer 30 - entsprechend in/an einem der Messkanäle 22 angeordnet - verwendet wird. Die resultierende Mantel-/Oberflächentemperatur ergibt sich hier so alleine aus der Messung durch das Quotientenpyrometer 30.

Alle vorherigen Ausführungen zu dem Schrumpfgerät 2 sind hier entsprechend - und bedürfen keiner Wiederholung.

### - Schrumpfgerät mit Kühlgerät mit berührungsloser Temperaturmessung (FIGen 5 bis 8)

FIGen 5 und 6 zeigen ein Schrumpfgerät 2 mit einem Kühlgerät 12, wie es in der EP 3 444 064 A1 gezeigt und im Detail beschrieben ist (siehe FIGen 1 und 4 und [0014] bis [0026] der EP 3 444 064 A1), deren Inhalt hiermit in diese Anmeldung aufgenommen wird (Bezugsdokument).

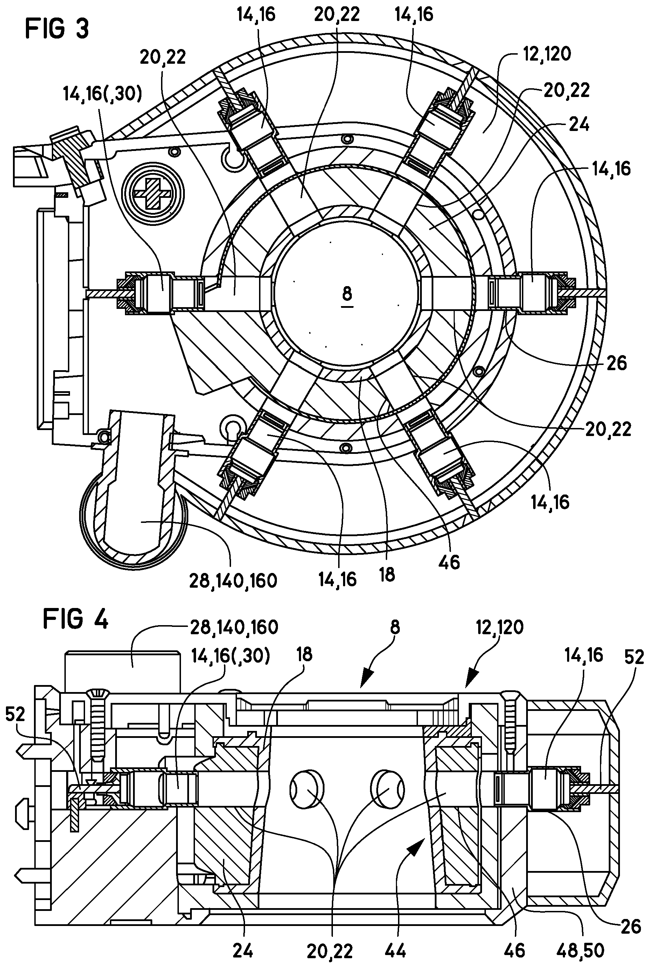

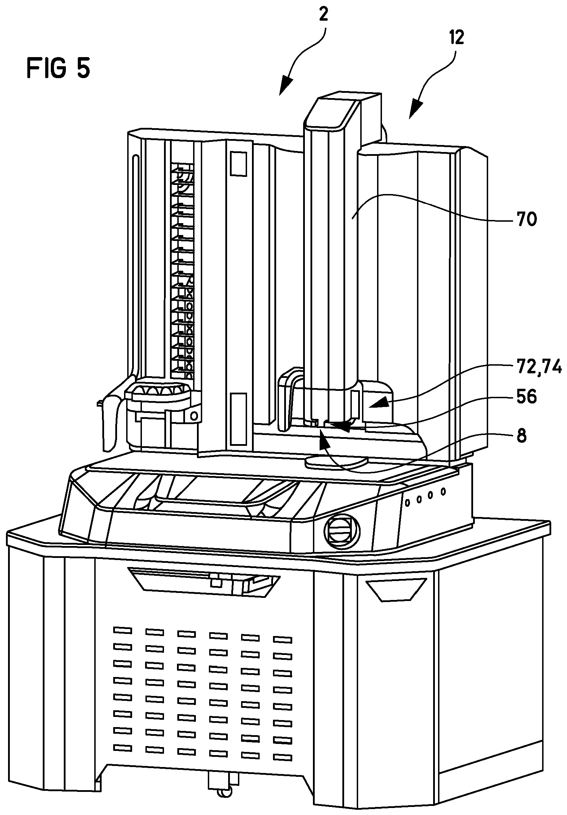

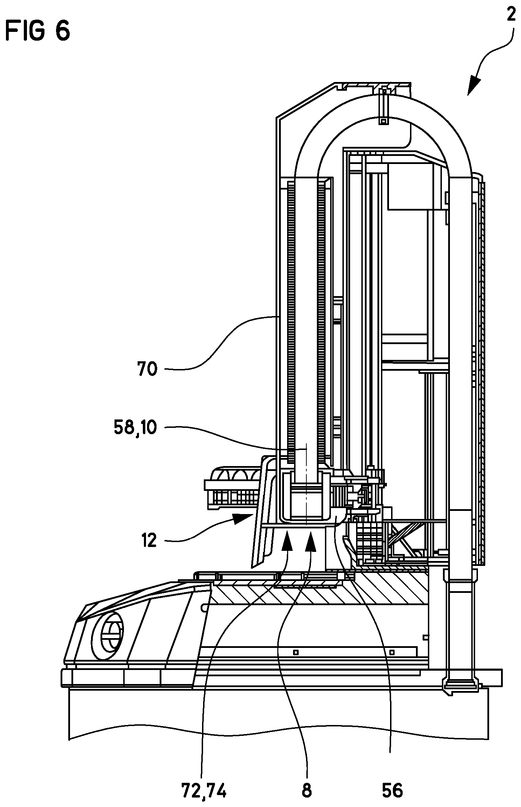

Wie FIG 5 (vgl. auch FIG 4 der EP 3 444 064 A1 (Bezugsdokument)) und FIG 6 (vgl. auch FIG 1 der EP 3 444 064 A1 (Bezugsdokument)) zeigen, weist das Kühlgerät 12 einen an einem Gestell oder Ständer 70 verschiebbar geführten Kühlkopf 72 auf, der einen zumindest auf den zu kühlenden Teil des Schrumpffutters 4 aufsetzbaren Kühlaufsatz 74 enthält. Der Kühlaufsatz 74 enthält eine Aufnahmeöffnung 8 (vgl. Durchgangsöffnung 6 in der EP 3 444 064 A1), deren Innenkontur/- durchmesser auf die Außenkontur/-durchmesser des zu kühlenden Teils des Schrumpffutters 4 (nicht dargestellt) abgestimmt ist (, so, dass ein Aufschieben/-setzen des Kühlaufsatzes 74 auf ein zu kühlendes Schrumpffutter 4 möglich ist).

Für weitere Details zu dem Schrumpfgerät 2 und dessen Kühlgeräts 12 wird auf die EP 3 444 064 A1 verwiesen (siehe FIGen 1 und 4 und [0014] bis [0026] der EP 3 444 064 A1).

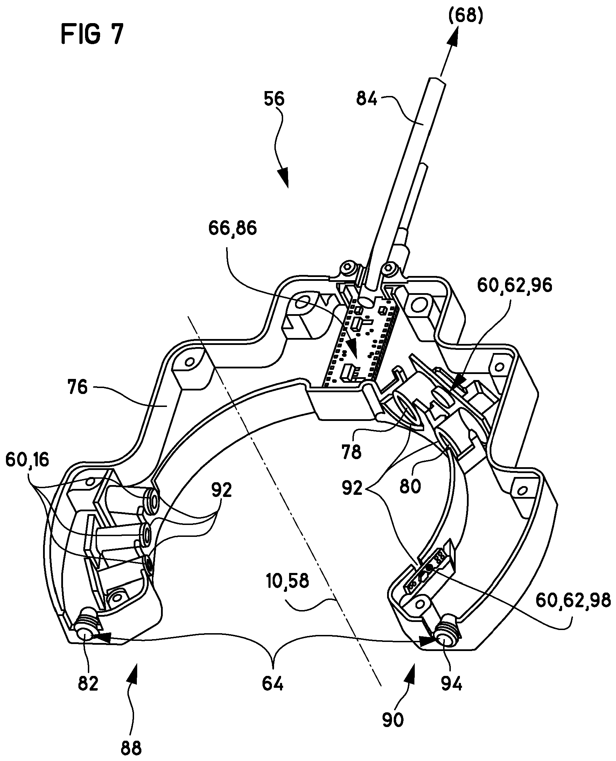

Wie FIGen 5 und 6 weiter zeigen, ist in den Kühlaufsatz 74 ein (über einen bestimmten Kreisringsektor offener) Mess- bzw. Sensorring 56 (vgl. FIG 7 (einen alternativen Sensorring zeigen die FIGen 9a und 9b)) integriert, mittels welchem - berührungslos - die Manteltemperatur eines in dem Kühlaufsatz 74 bzw. dessen Aufnahmeöffnung 8 aufgenommenen Schrumpffutters 4 messbar ist. Und zwar integriert derart, dass am unteren Rand des Kühlaufsatzes 74 der Messring 56 (vgl. FIG 7) - koaxial (mit seiner Mittelachse 58) zu der Mittelachse 10 des Kühlkopfes 72 bzw. Kühlaufsatzes 74 angeordnet ist.

Der Innendurchmesser des Messrings 56 ist dabei im Wesentlichen gleich dem des Kühlaufsatzes 74 (an dessen unterem Ende), wodurch dieser so Teil der Aufnahmeöffnung 8 wird.

FIG 7 zeigt den Messring 56 - in einem "oben" aufgeschnittenen Zustand, welcher einen Blick in ein Gehäuse 76 des Messrings 56 erlaubt, - im Detail.

Wie Fig. 7 verdeutlicht, handelt es sich bei dem Messring 56 um einen nahezu geschlossenen ringförmigen Körper - mit an seinem offenen Sektor sich gegenüberliegenden zwei Ringschenkel 88, 90.

Wie FIG 7 auch zeigt, sind in dem den Körper des Messrings 56 ausbildenden Messringgehäuse 76 mehrere verschiedenartige Sensoren 60, 16, 62, 96, 98 aufgenommen, nämlich drei nebeneinander angeordnete Infrarot-Temperatursensoren 16 - in einem linken Schenkel 88 des bildlich in Fig. 7 dargestellten Messrings 56, ein Ultraschallabstandssensor 60, 62, 96 umfassenden einen Sender 78 und einen Empfänger 80, sowie ein Reflexionssensor 60,62, 98 - in einem rechten Schenkel 90 des bildlich in Fig. 7 dargestellten Messrings 56.

Alle diese Sensoren 60, 16, 62, 96, 98 sind derart - in dem Messring 56 bzw. in dessen Gehäuse 76 - ausgerichtet aufgenommen, dass ihre jeweilige Messrichtung radial auf die Mittelachse 58, 10 ausgerichtet ist. Dazu sieht das Messringgehäuse 76 auch - radial innere - Durchgänge bzw. Öffnungen 92 vor, - an welchen angeordnet - durch welche hindurch die Sensoren 60, 16, 62, 96, 98 - radial nach innen - messen können.

In einer - nicht dargestellten - Ausführungsform können die Sensoren 60, 16, 62, 96, 98 auch im Wesentlichen senkrecht zum Außenmantel des Schrumpffutters 4 ausgerichtet sein, der in vielen Fällen konisch geformt ist.

Über Leitungen (nicht dargestellt) sind die Sensoren 60, 16, 62, 96, 98 mit einen ebenfalls in dem Messring 56 bzw. in dessen Gehäuse 76 aufgenommenen Microcontroller 86 (Berechnungseinheit 66) verbunden, so dass Messsignale der Sensoren 60, 16, 62, 96, 98 diesem zur Verarbeitung, hier insbesondere zur Ermittlung einer resultierenden Manteltemperatur eines in dem Kühlaufsatz 74 aufgenommenen Schrumpffutters 4 140, zugeführt werden.

Der Microcontroller 86 seinerseits ist über eine Zuleitung 84 mit einer Steuereinheit 68 bzw. - kurz mit einer Steuerung 68 - des Kühlgeräts 12 verbunden, an welche er seine Signale, wie die resultierende Manteltemperatur, überträgt. Die Steuerung 68 kann dann in Abhängigkeit aktuell ermittelter Manteltemperaturen einen Kühlvorgang 120 (bei einem in dem Kühlaufsatz 74 aufgenommenen Schrumpffutter 4) steuern 160.

Wie Fig. 7 auch zeigt, sieht der Messring 56 eine LED-(Wärme- )Statusanzeige 64 in Form zweier farbiger, an den Stirnseiten der beiden Schenkel 88, 90 angeordneter und so für einen Benutzer sichtbarer LED Leuchtdioden 82, 94 vor, von denen die eine rot 82, die andere grüne 94 ist - und welche - ebenfalls über den Microcontroller 86 mit der Steuerung 68 verbunden - auch über die Steuerung 68 gesteuert werden.

Eine - leuchtende - grüne LED Leuchtdiode 94 zeigt einen Wärmezustand eines Schrumpffutters 4 an, das beispielsweise so stark abgekühlt ist, dass es mit der bloßen Hand gefahrlos berührt werden kann; eine - leuchtende - rote LED Leuchtdiode 82 zeigt einen Wärmezustand eines noch nicht (genügend) abgekühlten Schrumpffutters 4 an. Ein rotes Blinken der roten LED Leuchtdiode 82 weist auf einen aktiven Kühlvorgang durch die Kühlung 12 hin.

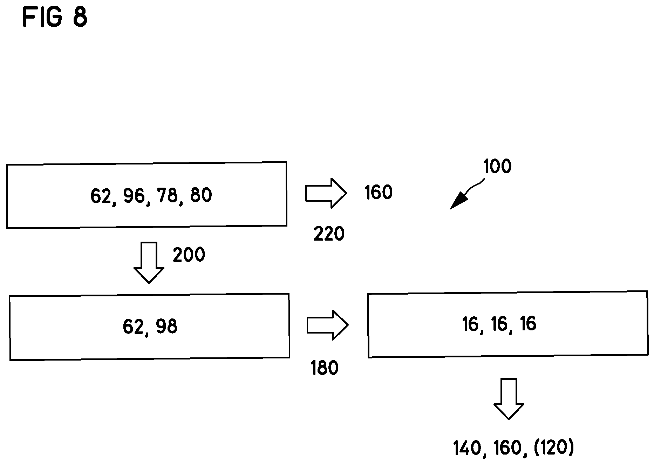

Fig. 8 verdeutlicht die Funktionsweise 100 bzw. das Zusammenwirken 200 der verschiedenen Sensoren 60, 16, 62, 96, 98 - bei deren Messungen bzw. bei der Ermittlung der Mantel-/Oberflächentemperatur eines durch Kühlung zu kühlenden bzw. in dem Kühlaufsatz 74 aufgenommenen Schrumpffutters 4 140 und Steuerung 160.

Der Messring 56 bzw. dessen Sensoren 60, 16, 62, 96, 98 (und Leuchtdioden 82, 94) sind aktiv bzw. werden aktiv geschaltet (1) sobald der Kühlaufsatz 74 - mit integriertem Messring 56 von oben über das zu kühlende Schrumpffutter 4 nach unten bewegt wird, (2) während des Kühlvorgangs 120, bei dem das Schrumpffutter 4 in dem Kühlaufsatz 74 aufgenommen ist (und (gesteuert über die Steuerung 68 (Anm.: die Steuerung 68 stellt dabei die Kühlparameter, wie eine Kühldauer etc., gegebenenfalls unter Verwendung von der ermittelten Oberflächentemperatur oder Oberflächenfarbe eines Schrumpffutters 4 ein)) gekühlt wird) und (3) solange bis der Kühlaufsatz 74 mit integriertem Messring 56 vollständig - nach oben hochgeschoben - von dem Schrumpffutter 4 abgehoben ist (insgesamt beispielsweise "Messphase"/"Messzyklus" genannt).

Der Anfang und das Ende der Messungen bzw. der Messphase ((1) bis (3)) kann (automatisch) mittels des (Ultraschall- )Abstandssensors 62, 96 bzw. 78/80 ermittelt werden, welcher - durch Abstandsmessung - erkennt, ob sich ein Schrumpffutter 4 in dem Messring 56 befindet 220.

Bei der Temperaturmessung bzw. Temperaturermittlung 140 (, welche durch den Microcontroller 86 durchgeführt wird,) wird dann mittels des Reflexionssensors 62, 98 - unter Verwendung der mittels des Abstandssensors 62, 96, 78, 80 ermittelten Abstandswerte - die Oberfläche bzw. die Oberflächenfarbe des in dem Messring 56 aufgenommenen Schrumpffutters 4 ermittelt (200). D.h., hier im Speziellen, ob das Schrumpffutter 4 eine schwarze Oberfläche aufweist oder nicht.

Auf Basis dieser Information werden diejenigen Infrarot-Temperatursensoren 16 - aus den drei im Messring 56 aufgenommenen Infrarot-Temperatursensoren 16 - für die Temperaturermittlung/-berechnung 140 ausgewählt 180, welche auf die vorliegende Oberfläche des in dem Messring 56 (aktuell) aufgenommenen Schrumpffutters 4 ("schwarz"/"nicht schwarz" bzw. "silbern", "weiß") (vor-)eingestellt/kalibriert sind (200).

Dabei ist bei dem Messring 56 ein erster der drei Infrarot-Temperatursensoren 16 auf eine schwarze Oberfläche eingestellt/kalibriert ("schwarzer Temperatursensor"), wohingegen die anderen beiden Infrarot-Temperatursensoren 16 auf nicht schwarze Oberflächen, beispielsweise silbern und weiß, eingestellt/kalibriert sind ("nicht-schwarze Temperatursensoren").

Wird so - mittels des Reflexionssensors 62, 98 ein "schwarzes" Schrumpffutter 4 in dem Messring 56 erkannt, erfolgt die Temperaturermittlung 140 unter Verwendung des einen "schwarzen" Infrarot-Temperatursensors 16; wird ein "nicht schwarzes" Schrumpffutter 4 in dem Messring 56 erkannt, erfolgt die Temperaturermittlung 140 unter Verwendung der beiden anderen "nicht-schwarzen" Temperatursensoren 16, beispielsweise durch Mittelwertbildung aus den Werten der beiden "nicht-schwarzen Temperatursensoren 16, 16.

Auf Basis der so ermittelten Oberflächen-/Manteltemperaturen eines sich in dem Messring 56 befindenden Schrumpffutters 4 erfolgt dann die Steuerung 160 der Kühlung 120, wie auch werden - entsprechend der ermittelten Oberflächen-/Manteltemperaturen - die LED-(Wärme- )Statusanzeigeleuchtdioden 82, 94 bzw. 64 angesteuert 160.

Im Speziellen mag sich die Leuchtdiodensteuerung dabei so gestalten, dass (1) wird zunächst der Kühlaufsatz 74 mit dem Messring 56 über das zu kühlende (heiße) Schrumpffutter 4 geschoben, die rote Leuchtdiode 82 - rot leuchtend - den heißen Zustand des Schrumpffutters 4 bzw. dessen Oberfläche/Mantel anzeigt.

Ist dann der Kühlaufsatz 74 vollständig über das Schrumpffutter 4 geschoben - und der Kühlvorgang 120 wird gestartet (2), blinkt die rote Leuchtdiode 82 - während des Kühlvorgangs 120 - und zeigt das "Kühlen" 120 an.

Ist der Kühlvorgang 120 beendet - und der Kühlaufsatz 74 wird nach oben angehoben (3), so leuchtet - im Fall eines noch zu heißen Schrumpffutters 4 - die rote Leuchtdiode 82 und - im Fall eines genügend heruntergekühlten Schrumpffutters 4 - die grüne Leuchtdiode 94. Zeigt so die rot leuchtende Leuchtdiode 82 ein noch zu heißes Schrumpffutter 4 an, so kann der Kühlaufsatz 74 wieder nach unten über das Schrumpffutter 4 heruntergeschoben - und ein weiterer Kühlvorgang 120 durchgeführt werden.

Gegebenenfalls kann auch der gesamte Kühlvorgang 120 - automatisch - an die Temperaturermittlung 140 angekoppelt sein - und darüber gesteuert 160 werden.

Des Weiteren wäre es auch möglich, nicht erst die Auswahl der (voreingestellten) Infrarot-Temperatursensoren 16 auf Basis der Reflexionsmessung (98) zu treffen, sondern schon die Einstellung eines oder mehrerer von den Infrarot-Temperatursensoren 16 auf Basis einer aktuellen Reflexionsmessung (98) durchzuführen. Der bzw. die derart dann (aktuell) eingestellten Infrarot-Temperatursensoren 16 können dann für die Temperaturermittlung 140 der Mantel-/Oberflächentemperatur des Schrumpffutters 4 herangezogen werden. Gegebenenfalls kann auch auf eine "Korrektur" der Reflexionsmessung (98) mittels des Abstandssensors (96, 78, 80) verzichtet werden.

Ergänzend wird auch darauf verwiesen, dass ein dem vorbeschriebenen Messring 56 entsprechender Messring 56 auch an einer Induktionsspulenanordnung 12 eines/des Schrumpfgeräts 2 angeordnet sein kann, um dort - von in der Aufnahmeöffnung 8 der Induktionsspulenanordnung 12 aufgenommenen Schrumpffuttern 4 - deren Manteltemperaturen zu messen (vgl. FIGen 1 bis 4). Entsprechend auch kann ein dem vorbeschriebenen Messring 56 entsprechender Messring 56 an eigenständigen bzw. alleine arbeitenden, separaten Kühlgeräten 12 angeordnet sein.

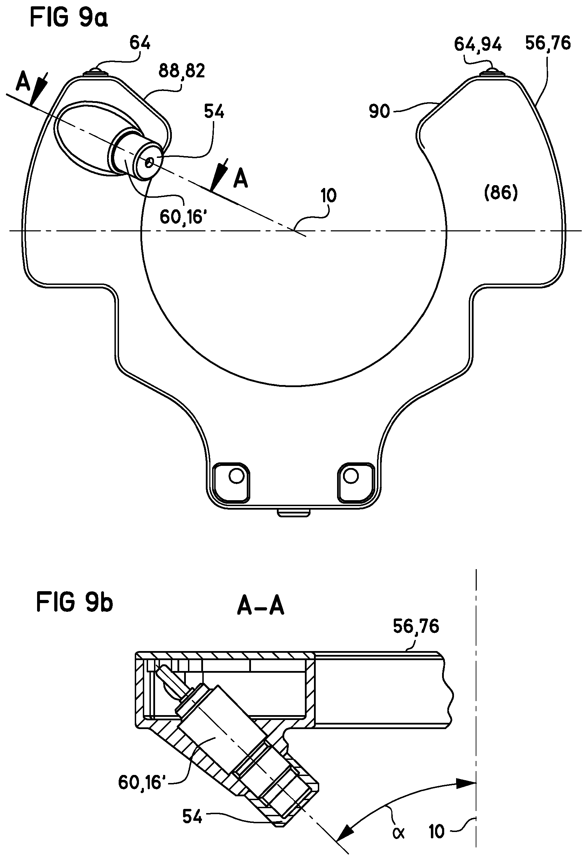

FIGen 9a und b zeigen einen alternativen (, in seiner Funktionsweise gleich einsetzbaren bzw. eingesetzten), in den Kühlaufsatz 74 integrierbaren Messring 56 - mit FIG 9a diesen in einer Gesamtansicht und mit FIG 9b einen Detailausschnitt von diesem in "oben" aufgeschnittenem Zustand.

Wie Fig. 9a verdeutlicht, handelt es sich auch bei diesem Messring 56 um einen nahezu geschlossenen ringförmigen Körper - mit an seinem offenen Sektor sich gegenüberliegenden zwei Ringschenkel 88, 90.

Wie FIG 9a (und FIG 9b im Detail) auch zeigt, ist in dem den Körper des Messrings 56 ausbildenden Messringgehäuse 76 ein einziger Temperatursensor 60 aufgenommen, nämlich ein Infrarot-Temperatursensor 16' - in einem linken Schenkel 88 des bildlich in Fig. 9a dargestellten Messrings 56.

Ungeachtet dessen, können auch andere Halteeinrichtungen als der Messring 56 für den Temperatursensor 16'vorgesehen werden.

Der Temperatursensor 60 bzw. 16'ist mit einer Blende 54 ausgestattet.

Anders als bei vorbeschriebenem Messring 56 (nach FIG 7) ist dieser Temperatursensor 60 bzw. 16' hier - zu der Mittelachse 10 um einen Winkel α von ca. 45° schräggestellt - in dem Messringgehäuse 76 aufgenommen.

Über Leitungen (nicht dargestellt) ist der Temperatursensor 60 bzw. 16' mit einen ebenfalls in dem Messring 56 bzw. in dessen Gehäuse 76 aufgenommenen Microcontroller 86 (Berechnungseinheit 66, nicht sichtbar) verbunden, so dass Messsignale des Temperatursensors 60 bzw. 16' diesem zur Verarbeitung, hier insbesondere zur Ermittlung der Manteltemperatur eines in dem Kühlaufsatz 74 aufgenommenen Schrumpffutters 4 140, zugeführt werden.

Der Microcontroller 86 seinerseits ist (nicht sichtbar) über eine Zuleitung 84 mit einer Steuereinheit 68 bzw. - kurz mit einer Steuerung 68 - des Kühlgeräts 12 verbunden, an welche er seine Signale, wie die Manteltemperatur, überträgt.

Die Steuerung 68 kann dann in Abhängigkeit der aktuellen Manteltemperaturen einen Kühlvorgang 120 (bei einem in dem Kühlaufsatz 74 aufgenommenen Schrumpffutter 4) steuern 160.

Wie Fig. 9a auch zeigt, sieht der Messring 56 eine LED-(Wärme-)Statusanzeige 64 in Form zweier farbiger, an den Stirnseiten der beiden Schenkel 88, 90 angeordneter und so für einen Benutzer sichtbarer LED Leuchtdioden 82, 94 vor, von denen die eine rot 82, die andere grüne 94 ist und welche - ebenfalls über den Microcontroller 86 mit der Steuerung 68 verbunden - auch über die Steuerung 68 gesteuert werden.

Eine - leuchtende - grüne LED Leuchtdiode 94 zeigt einen Wärmezustand eines Schrumpffutters 4 an, das beispielsweise so stark abgekühlt ist, dass es mit der bloßen Hand gefahrlos berührt werden kann; eine - leuchtende - rote LED Leuchtdiode 82 zeigt einen Wärmezustand eines noch nicht (genügend) abgekühlten Schrumpffutters 4 an. Ein rotes Blinken der roten LED Leuchtdiode 82 weist auf einen aktiven Kühlvorgang durch die Kühlung 12 hin.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können hieraus abgeleitet werden, ohne den Schutzumfang der Erfindung zu verlassen.

### Bezugszeichenliste:

- 2: Gerät zu einer Wärmebehandlung, Schrumpfgerät, Kühlgerät, Schrumpfgerät mit Kühlgerät
- 4: Schrumpffutter
- 6: Schaft-/Rotationswerkzeug, Fräser/Fräswerkzeug
- 8: Aufnahmeeinrichtung, Aufnahmeöffnung
- 10: Mittelachse, Spulenachse

- 12: Wärmebehandlungseinheit, Induktionsspulenanordnung, Kühlgerät/-einheit
- 14: Messeinheit
- 16, 16': Temperatursensor, Pyrometer mit Strahlungsdetektor, Strahlungsdetektor
- 18: (Spulen-)Gehäuse
- 20: Unterbrechungen

- 22: Messkanal
- 24: Spulenwicklung
- 26: Durchbruch
- 28: Kontroll-/Steuereinheit

- 30: Quotientenpyrometer
- 32: Hülsenpartie
- 34: Spannbereich
- 36: Stirnöffnung
- 38: vorderes Stirnende

- 40: Werkzeugschaft, Fräserschaft
- 42: vorderer Arbeitsabschnitt
- 44: axialer Zentralbereich
- 46: spulenseitiger innerer Abschnitt
- 48: Außenwand

- 50: Induktionsspulengehäuse
- 52: Kabel
- 54: Fokussiervorrichtung, Abschirmeinrichtung, Blende
- 56: (ringförmige) Baueinheit, Mess-/Sensorring
- 58: Mittelachse der (ringförmigen) Baueinheit/Messrings

- 60: Sensor
- 62: andersartiger zweiter Sensor, Abstandssensor, optischer (Abstands-)Sensor, Ultraschallsensor, Lasersensor, (Infrarot-)Reflexionssensor,
- 64: Anzeigeeinrichtung, (LED-) (Wärme-)Statusanzeige
- 66: Berechnungseinheit
- 68: Steuerung, Steuereinheit

- 70: Ständer
- 72: Kühlkopf
- 74: Kühlaufsatz
- 76: (Messring-)Gehäuse
- 78: Sender

- 80: Empfänger
- 82: (rote) Leuchtdiode
- 84: Zuleitung
- 86: Microcontroller
- 88: (linker) Schenkel

- 90: (rechter) Schenkel
- 92: Durchgang, Unterbrechung
- 94: (grüne) Leuchtdiode
- 96: (Ultraschall-)Abstandssensor
- 98: Reflexionssensor

- 100: Verfahren
- 120: Wärmebehandeln, Erwärmen, Ein-/Ausschrumpfen, Kühlen
- 140: Ermitteln einer resultierenden Mantel-/Oberflächentemperatur
- 160: Kontrolle/Steuerung der Wärmebehandlung, Kontrolle/Steuerung der Erwärmung/des Kühlens, Kontrol- le/Steuerung der der Erwärmungsleistung bzw. der Stromzufuhr
- 180: Durchführen einer Kalibrierung/Settings oder einer Einstellung bei zumindest einem (ersten) Temperatursensor (16) unter Verwendung des andersartigen zweiten Sensors (62), Zusammenwirken des zumindest einen (ersten) Temperatursensor (16) mit dem andersartigen zweiten Sensor (62)
- 200: Zusammenwirken eines ersten andersartigen zweiten Sensors (62) mit einem zweiten andersartigen zweiten Sensor (62)
- 220: Erkennen eines in der Aufnahmeeinrichtung (8) aufgenommenen Schrumpffutters (4) unter Verwendung eines andersartigen zweiten Sensors.

Der Schutzumfang wird durch die Patentansprüche definiert.

## Patentansprüche

1. Gerät (2) zu einer Wärmebehandlung, insbesondere zu einem induktiven Erwärmen oder einem Kühlen, von Schrumpffuttern (4) für Schaftwerkzeuge (6), insbesondere ein Schrumpfgerät (2) oder ein Kühlgerät (2) oder ein Schrumpfgerät mit Kühlgerät (2), mit einer Aufnahmeeinrichtung (8), insbesondere einer Aufnahmeöffnung (8), zum Aufnehmen eines Schrumpffutters (4), einer die Aufnahmeeinrichtung (8) bezüglich einer Mittelachse (10), insbesondere konzentrisch, umschließenden Wärmebehandlungseinheit (12), insbesondere einer Induktionsspulenanordnung (12) oder einer Kühleinheit (12), und einer Messeinheit (14) zur, insbesondere berührungslosen, Temperaturmessung des Schrumpffutters (4),
wobei die Messeinheit (14) mehrere um die Aufnahmeeinrichtung (8) herum angeordnete Temperatursensoren (16) zur, insbesondere berührungslosen, Erfassung einer Manteltemperatur eines in der Aufnahmeeinrichtung (8) angeordneten Schrumpffutters (4) aufweist, **dadurch gekennzeichnet, dass** zumindest zwei, insbesondere mehrere oder alle, von den Temperatursensoren (16) unterschiedliche Konfigurationen/Messeinstellungen der Form aufweisen, dass sie unterschiedlich kalibriert sind, oder dass die Messeinheit (14) zumindest einen um die Aufnahmeeinrichtung (8) herum angeordneten, bezüglich der Mittelachse (10) schräggestellten Temperatursensor (16') zur, insbesondere berührungslosen, Erfassung einer Manteltemperatur eines in der Aufnahmeeinrichtung (8) angeordneten Schrumpffutters (4) aufweist.

2. Gerät (2) nach einem der voranstehenden Ansprüche
**dadurch gekennzeichnet, dass**
zumindest zwei, insbesondere mehrere oder alle, von den Temperatursensoren (16) unterschiedliche Konfigurationen/Messeinstellungen der Form aufweisen, dass Temperatursensoren für/auf unterschiedliche Materialien/Oberflächen von Schrumpffuttern (bzw. unterschiedliche Emissionsgrade ε) unterschiedlich kalibriert sind und/oder Messbereiche in unterschiedlichen Wellenlängenbereichen aufweisen.

3. Gerät (2) nach einem der voranstehenden Ansprüche
**dadurch gekennzeichnet, dass**
die mehreren Temperatursensoren (16) jeweils und/oder der schräggestellte Temperatursensor (16') als Strahlungsdetektor, insbesondere als Pyrometer mit einem Strahlungsdetektor zur Erfassung einer Wärmestrahlung von einem in der Aufnahmeeinrichtung (8) angeordneten Schrumpffutter (4), ausgebildet sind.

4. Gerät (2) nach einem der voranstehenden Ansprüche
**dadurch gekennzeichnet, dass**
ein Schrägstellungswinkel des schräggestellten Temperatursensors (16') zwischen 30° und 60°, insbesondere 45°, beträgt.

5. Gerät (2) zu einer Wärmebehandlung, insbesondere zu einem induktiven Erwärmen oder einem Kühlen, von Schrumpffuttern (4) für Schaftwerkzeuge (6), insbesondere ein Schrumpfgerät oder ein Kühlgerät oder ein Schrumpfgerät mit Kühlgerät, mit einer Aufnahmeeinrichtung (8), insbesondere einer Aufnahmeöffnung (8), zum Aufnehmen eines Schrumpffutters (4), einer die Aufnahmeeinrichtung (8) bezüglich einer Mittelachse (10), insbesondere konzentrisch, umschließenden Wärmebehandlungseinheit (60), insbesondere einer Induktionsspulenanordnung (12) oder einer Kühleinheit (62), und einer Messeinheit (14) zur, insbesondere berührungslosen, Temperaturmessung des Schrumpffutters (4),
wobei die Messeinheit (14) mehrere um die Aufnahmeeinrichtung (8) herum angeordnete Sensoren (60) aufweist, **dadurch gekennzeichnet, dass** zumindest ein erster davon ein Temperatursensor (16) zur, insbesondere berührungslosen, Erfassung einer Manteltemperatur eines in der Aufnahmeeinrichtung (8) angeordneten Schrumpffutters (4) ist und mindestens ein zweiter davon ein andersartiger Sensor (62) zur Erfassung einer anderen Eigenschaft des in der Aufnahmeeinrichtung (8) angeordneten Schrumpffutters (4) ist.

6. Gerät (2) nach dem voranstehenden Anspruch
**dadurch gekennzeichnet, dass**
der mindestens eine zweite andersartige Sensor (62) ein, insbesondere berührungslos messender, Abstandssensor (62), insbesondere ein optischer Sensor (62) oder ein Ultraschallsensor (62) oder ein Lasersensor (62) oder ein Reflexionssensor (62), insbesondere ein Infrarot-Reflexionssensor (62), ist

7. Gerät (2) nach einem der voranstehenden Ansprüche
**dadurch gekennzeichnet, dass**
zumindest zwei, insbesondere mehrere oder alle, von den Temperatursensoren (16) unterschiedliche Konfigurationen/Messeinstellungen der Form aufweisen, dass Temperatursensoren für/auf unterschiedliche Materialien/Oberflächen von Schrumpffuttern (bzw. unterschiedliche Emissionsgrade ε) unterschiedlich kalibriert sind und/oder Messbereiche in unterschiedlichen Wellenlängenbereichen aufweisen.

8. Gerät (2) nach einem der voranstehenden Ansprüche
**dadurch gekennzeichnet, dass**
die Sensoren (16, 60, 62) kreisförmig und/oder auf unterschiedlicher axialer Höhe bezüglich der Mittelachse (10) bei der bzw. um die Aufnahmeeinrichtung (8) angeordnet sind.

9. Gerät (2) nach einem der voranstehenden Ansprüche
**dadurch gekennzeichnet, dass**
die Sensoren (16, 60, 62) in einer im Wesentlichen ringförmigen Baueinheit (56) angeordnet sind, insbesondere im Wesentlichen kreisförmig um eine Mittelachse (58) der im Wesentlichen ringförmigen Baueinheit (56) und/oder auf unterschiedlicher oder insbesondere auf gleicher axialer Höhe in Bezug auf die Mittelachse (58) der im Wesentlichen ringförmigen Baueinheit (56).

10. Gerät (2) nach dem voranstehenden Anspruch
**dadurch gekennzeichnet, dass**
die im Wesentlichen ringförmige Baueinheit (56) koaxial zu der Mittelachse (10) bei dem Gerät (2), insbesondere axial benachbart zu der Wärmebehandlungseinheit (12), insbesondere der Induktionsspulenanordnung (12) oder der Kühleinheit (12), angeordnet ist und/oder dass gleichartige von den Sensoren (16, 60, 62) benachbart in der im Wesentlichen ringförmigen Baueinheit (56) angeordnet sind.

11. Verfahren (100) zum Betreiben eines Geräts (2) nach mindestens einem der voranstehenden Geräteansprüche, insbesondere zu einem induktiven Aufheizen (120) von einem Schrumpffutter (4) oder einem Kühlen von einem Schrumpffutter (4), in einem Gerät (2) nach mindestens einem der voranstehenden Schrumpfgeräteansprüche,
bei welchem
eine resultierende Manteltemperatur eines in der Aufnahmeeinrichtung (8) angeordneten Schrumpffutters (4) unter Verwendung der mehreren Sensoren (16, 60, 62) ermittelt wird (140), insbesondere unter Verwendung von von mehreren Temperatursensoren (16) erfassten Manteltemperaturen des in der Aufnahmeeinrichtung (8) angeordneten Schrumpffutters (4).

12. Verfahren (100) nach einem der voranstehenden Verfahrensansprüche,
**dadurch gekennzeichnet, dass**
ein Schrumpffutter (4) in der von einer als Induktionsspulenanordnung (12) ausgebildeten Wärmebehandlungseinrichtung (12) umschlossenen Aufnahmeeinrichtung (8) induktiv erwärmt (120) und dadurch aufgeweitet wird und dass unter Verwendung der resultierenden Manteltemperatur der Erwärmungsvorgang kontrolliert wird (160)
oder
dass ein Schrumpffutter (4) in der von einer als Kühleinheit (12) ausgebildeten Wärmebehandlungseinrichtung (12) umschlossenen Aufnahmeeinrichtung (8) gekühlt (120) und dass unter Verwendung der resultierenden Manteltemperatur der Kühlvorgang kontrolliert wird (160).

13. Verfahren nach einem der voranstehenden Verfahrensansprüche,
**dadurch gekennzeichnet, dass**
bei mehreren Temperatursensoren (16) unterschiedliche Kalibrierungen/Settings, insbesondere unterschiedliche Emissionsgrade ε eingestellt sind oder werden, und Messungen der mehreren Temperatursensoren (16) verglichen und/oder gemeinsam verarbeitet werden und daraus die resultierende Manteltemperatur bestimmt wird (140).

14. Verfahren nach einem der voranstehenden Verfahrensansprüche,
**dadurch gekennzeichnet, dass**
ein Signal ein und desselben Strahlungssensors (62) auf unterschiedliche Art ausgewertet wird.

15. Verfahren nach einem der voranstehenden Verfahrensansprüche,
**dadurch gekennzeichnet, dass**
unter Verwendung einer Messung des andersartigen zweiten Sensors (62) eine Kalibrierung/Setting oder Einstellung bei zumindest einem Temperatursensor (16) durchgeführt wird (180) oder dass unter Verwendung einer Messung des andersartigen zweiten Sensors (62) bestimmt wird (180), wie die resultierende Manteltemperatur, insbesondere aus den Messungen von mehreren Temperatursensoren (16), bestimmt wird (140).

16. Gerät (2) zu einer Wärmebehandlung, insbesondere zu einem induktiven Erwärmen oder einem Kühlen, von Schrumpffuttern (4) für Schaftwerkzeuge (6), insbesondere ein Schrumpfgerät (2) oder ein Kühlgerät (2) oder ein Schrumpfgerät mit Kühlgerät (2), mit einer Aufnahmeeinrichtung (8), insbesondere einer Aufnahmeöffnung (8), zum Aufnehmen eines Schrumpffutters (4), einer die Aufnahmeeinrichtung (8) bezüglich einer Mittelachse (10), insbesondere konzentrisch, umschließenden Wärmebehandlungseinheit (12), insbesondere einer Induktionsspulenanordnung (12) oder einer Kühleinheit (12), und einer Messeinheit (14) zur, insbesondere berührungslosen, Temperaturmessung des Schrumpffutters (4),
**dadurch gekennzeichnet, dass**
die Messeinheit (14) einen Quotientenpyrometer (30) aufweist.

## Claims

1. Appliance (2) for a heat treatment, in particular for inductive heating or cooling, of shrink chucks (4) for shaft-type tools (6), in particular a shrinkage appliance (2) or a cooling appliance (2) or a shrinkage appliance with cooling appliance (2), having a receiving device (8), in particular a receiving opening (8), for receiving a shrink chuck (4), having a heat treatment unit (12) which in particular concentrically surrounds the receiving device (8) with respect to a central axis (10), in particular an induction coil arrangement (12) or a cooling unit (12), and having a measuring unit (14) for in particular contactless temperature measurement of the shrink chuck (4),
wherein the measuring unit (14) has multiple temperature sensors (16) which are arranged around the receiving device (8) and which serve for in particular contactless detection of a shell temperature of a shrink chuck (4) arranged in the receiving device (8), **characterized in that** at least two, in particular several or all, of the temperature sensors (16) have different configurations/measurement settings by virtue of their being calibrated differently, or **in that** the measuring unit (14) has at least one temperature sensor (16') which is arranged around the receiving device (8) and which is inclined relative to the central axis (10) and which serves for in particular contactless detection of a shell temperature of a shrink chuck (4) arranged in the receiving device (8).

2. Appliance (2) according to any one of the preceding claims,
**characterized in that**
at least two, in particular several or all, of the temperature sensors (16) have different configurations/measurement settings by virtue of temperature sensors being differently calibrated for/to different materials/surfaces of shrink chucks (or different emissivities ε) and/or having measurement ranges in different wavelength ranges.

3. Appliance (2) according to any one of the preceding claims,
**characterized in that**
each of the multiple temperature sensors (16) and/or the inclined temperature sensor (16') are configured as a radiation detector, in particular as a pyrometer with a radiation detector for detecting thermal radiation from a shrink chuck (4) arranged in the receiving device (8).

4. Appliance (2) according to any one of the preceding claims,
**characterized in that**
an inclination angle of the inclined temperature sensor (16') is between 30° and 60°, in particular 45°.

5. Appliance (2) for a heat treatment, in particular for inductive heating or cooling, of shrink chucks (4) for shaft-type tools (6), in particular a shrinkage appliance or a cooling appliance or a shrinkage appliance with cooling appliance, having a receiving device (8), in particular a receiving opening (8), for receiving a shrink chuck (4), having a heat treatment unit (60) which in particular concentrically surrounds the receiving device (8) with respect to a central axis (10), in particular an induction coil arrangement (12) or a cooling unit (62), and having a measuring unit (14) for in particular contactless temperature measurement of the shrink chuck (4), wherein the measuring unit (14) has multiple sensors (60) which are arranged around the receiving device (8), **characterized in that** at least a first of said sensors is a temperature sensor (16) for in particular contactless detection of a shell temperature of a shrink chuck (4) arranged in the receiving device (8), and at least a second of said sensors is a sensor (62) of different type for detection of another property of the shrink chuck (4) arranged in the receiving device (8).

6. Appliance (2) according to the preceding claim,
**characterized in that**
the at least one second sensor (62) of different type is a distance sensor (62) that measures in particular in contactless fashion, in particular an optical sensor (62) or an ultrasound sensor (62) or a laser sensor (62) or a reflection sensor (62), in particular an infrared reflection sensor (62).

7. Appliance (2) according to any one of the preceding claims,
**characterized in that**
at least two, in particular several or all, of the temperature sensors (16) have different configurations/measurement settings by virtue of temperature sensors being differently calibrated for/to different materials/surfaces of shrink chucks (or different emissivities ε) and/or having measurement ranges in different wavelength ranges.

8. Appliance (2) according to any one of the preceding claims,
**characterized in that**
the sensors (16, 60, 62) are arranged in circular form and/or at different axial heights with respect to the central axis (10) at or around the receiving device (8).

9. Appliance (2) according to any one of the preceding claims,
**characterized in that**
the sensors (16, 60, 62) are arranged in a substantially ring-shaped structural unit (56), in particular in substantially circular form about a central axis (58) of the substantially ring-shaped structural unit (56) and/or at different axial heights or in particular at the same axial height with respect to the central axis (58) of the substantially ring-shaped structural unit (56).

10. Appliance (2) according to the preceding claim,
**characterized in that**
the substantially ring-shaped structural unit (56) is arranged coaxially with respect to the central axis (10) in the appliance (2), in particular axially adjacent to the heat treatment unit (12), in particular the induction coil arrangement (12) or the cooling unit (12), and/or in that of the sensors (16, 60, 62), sensors of the same type are arranged adjacently in the substantially ring-shaped structural unit (56).

11. Method (100) for operating an appliance (2) according to at least one of the preceding appliance claims, in particular for inductive heating (120) of a shrink chuck (4) or cooling of a shrink chuck (4), in an appliance (2) according to at least one of the preceding shrinkage appliance claims,
in which method
a resulting shell temperature of a shrink chuck (4) arranged in the receiving device (8) is ascertained (140) using the multiple sensors (16, 60, 62), in particular using shell temperatures, detected by multiple temperature sensors (16), of the shrink chuck (4) arranged in the receiving device (8).

12. Method (100) according to any one of the preceding method claims,
**characterized in that**
a shrink chuck (4) in the receiving device (8), which is surrounded by a heat treatment device (12) configured as an induction coil arrangement (12), is inductively heated (120) and thus expanded, and **in that** the heating operation is controlled (160) using the resulting shell temperature,
or
**in that** a shrink chuck (4) in the receiving device (8), which is surrounded by a heat treatment device (12) configured as a cooling unit (12), is cooled (120), and **in that** the cooling operation is controlled (160) using the resulting shell temperature.

13. Method according to any one of the preceding method claims,
**characterized in that**
different calibrations/settings, in particular different emissivities ε, are set at multiple temperature sensors (16), and measurements from the multiple temperature sensors (16) are compared and/or jointly processed, and from these the resulting shell temperature is determined (140).

14. Method according to any one of the preceding method claims,
**characterized in that**
a signal from one and the same radiation sensor (62) is evaluated in different ways.

15. Method according to any one of the preceding method claims,
**characterized in that**
a calibration/setting or adjustment at at least one temperature sensor (16) is performed (180) using a measurement from the second sensor (62) of different type, or **in that**, using a measurement from the second sensor (62) of different type, it is determined (180) how the resulting shell temperature is determined (140), in particular from the measurements from multiple temperature sensors (16).

16. Appliance (2) for a heat treatment, in particular for inductive heating or cooling, of shrink chucks (4) for shaft-type tools (6), in particular a shrinkage appliance (2) or a cooling appliance (2) or a shrinkage appliance with cooling appliance (2), having a receiving device (8), in particular a receiving opening (8), for receiving a shrink chuck (4), having a heat treatment unit (12) which in particular concentrically surrounds the receiving device (8) with respect to a central axis (10), in particular an induction coil arrangement (12) or a cooling unit (12), and having a measuring unit (14) for in particular contactless temperature measurement of the shrink chuck (4),
**characterized in that**
the measuring unit (14) has a quotient pyrometer (30).

## Revendications

1. Appareil (2) de traitement thermique, en particulier de chauffage par induction ou de refroidissement, de mandrins rétractables (4) pour des outils à manche (6), en particulier appareil de frettage (2) ou appareil de refroidissement (2) ou appareil de frettage avec appareil de refroidissement (2), avec un dispositif de réception (8), en particulier une ouverture de réception (8), pour recevoir un mandrin rétractable (4), une unité de traitement thermique (12) renfermant, en particulier de manière concentrique, le dispositif de réception (8) par rapport à un axe central (10), en particulier un ensemble de bobines d'induction (12) ou une unité de refroidissement (12), et une unité de mesure (14) pour mesurer, en particulier sans contact, la température du mandrin rétractable (4),
l'unité de mesure (14) comportant plusieurs capteurs de température (16) disposés tout autour du dispositif de réception (8), destinés à détecter, en particulier sans contact, une température extérieure d'un mandrin rétractable (4) disposé dans le dispositif de réception (8), **caractérisé en ce qu'**au moins deux, en particulier plusieurs ou tous les, capteurs de température (16) présentent différentes configurations/différents réglages de mesure du moule, qu'ils sont étalonnés différemment, ou que l'unité de mesure (14) comporte au moins un capteur de température incliné (16') par rapport à l'axe central (10), disposé tout autour du dispositif de réception (8), pour détecter, en particulier sans contact, une température extérieure d'un mandrin rétractable (4) disposé dans le dispositif de réception (8).

2. Appareil (2) selon l'une des revendications précédentes,
**caractérisé en ce que**
au moins deux, en particulier plusieurs ou tous les, capteurs de température (16) présentent différentes configurations/différents réglages de mesure du moule, que des capteurs de température pour/sur différents matériaux/différentes surfaces de mandrins rétractables (ou différents degrés d'émission ε) sont étalonnés différemment et/ou comportent des zones de mesure dans différentes plages de longueurs d'onde.

3. Appareil (2) selon l'une des revendications précédentes,
**caractérisé en ce que**
les plusieurs capteurs de température (16) respectivement et/ou le capteur de température incliné (16') sont formés en tant que détecteurs de rayonnement, en particulier en tant que pyromètres avec un détecteur de rayonnement pour détecter un rayonnement thermique d'un mandrin rétractable (4) disposé dans le dispositif de réception (8).

4. Appareil (2) selon l'une des revendications précédentes,
**caractérisé en ce que**
un angle d'inclinaison du capteur de température incliné (16') est compris entre 30° et 60°, en particulier est de 45°.

5. Appareil (2) de traitement thermique, en particulier de chauffage par induction ou de refroidissement, de mandrins rétractables (4) pour des outils à manche (6), en particulier appareil de frettage ou appareil de refroidissement ou appareil de frettage avec appareil de refroidissement, avec un dispositif de réception (8), en particulier une ouverture de réception (8), pour recevoir un mandrin rétractable (4), une unité de traitement thermique (60) renfermant, en particulier de manière concentrique, le dispositif de réception (8) par rapport à un axe central (10), en particulier un ensemble de bobines d'induction (12) ou une unité de refroidissement (62), et une unité de mesure (14) pour mesurer, en particulier sans contact, la température du mandrin rétractable (4), l'unité de mesure (14) comportant plusieurs capteurs (60) disposés tout autour du dispositif de réception (8), **caractérisé en ce qu'**au moins un premier capteur de ceux-ci est un capteur de température (16) pour détecter, en particulier sans contact, une température extérieure d'un mandrin rétractable (4) disposé dans le dispositif de réception (8) et au moins un deuxième capteur de ceux-ci est un capteur d'un autre type (62) pour détecter une autre propriété du mandrin rétractable (4) disposé dans le dispositif de réception (8).

6. Appareil (2) selon la revendication précédente,
**caractérisé en ce que**
l'au moins un deuxième capteur d'un autre type (62) est un capteur de distance (62) de mesure en particulier sans contact, en particulier un capteur optique (62) ou un capteur à ultrasons (62) ou un capteur laser (62) ou un capteur de réflexion (62), en particulier un capteur de réflexion infrarouge (62).

7. Appareil (2) selon l'une des revendications précédentes,
**caractérisé en ce que**
au moins deux, en particulier plusieurs ou tous les, capteurs de température (16) présentent différentes configurations/différents réglages de mesure du moule, que des capteurs de température pour/sur différents matériaux/différentes surfaces de mandrins rétractables (ou différents degrés d'émission ε) sont étalonnés différemment et/ou comportent des zones de mesure dans différentes plages de longueurs d'onde.

8. Appareil (2) selon l'une des revendications précédentes,
**caractérisé en ce que**
les capteurs (16, 60, 62) sont disposés en forme de cercle et/ou à une hauteur axiale différente par rapport à l'axe central (10) à proximité ou autour du dispositif de réception (8).

9. Appareil (2) selon l'une des revendications précédentes,
**caractérisé en ce que**
les capteurs (16, 60, 62) sont disposés dans une unité modulaire (56) sensiblement annulaire, en particulier sensiblement en forme de cercle autour d'un axe central (58) de l'unité modulaire (56) sensiblement annulaire et/ou à une hauteur différente ou en particulier à une hauteur axiale identique par rapport à l'axe central (58) de l'unité modulaire (56) sensiblement annulaire.

10. Appareil (2) selon la revendication précédente,
**caractérisé en ce que**
l'unité modulaire (56) sensiblement annulaire est disposée coaxialement à l'axe central (10) à proximité de l'appareil (2), en particulier de manière axialement adjacente par rapport à l'unité de traitement thermique (12), en particulier à l'ensemble de bobines d'induction (12) ou à l'unité de refroidissement (12), et/ou que des capteurs similaires des capteurs (16, 60, 62) sont disposés de manière adjacente dans l'unité modulaire (56) sensiblement annulaire.

11. Procédé (100) destiné à faire fonctionner un appareil (2) selon au moins l'une des revendications d'appareil précédentes, en particulier destiné à chauffer par induction (120) un mandrin rétractable (4) ou à refroidir un mandrin rétractable (4), dans un appareil (2) selon au moins l'une des revendications d'appareil de frettage précédentes,
dans lequel
une température extérieure résultante d'un mandrin rétractable (4) disposé dans le dispositif de réception (8) est déterminée (140) en utilisant les plusieurs capteurs (16, 60, 62), en particulier en utilisant des températures extérieures du mandrin rétractable (4) disposé dans le dispositif de réception (8) détectées par plusieurs capteurs de température (16).

12. Procédé (100) selon l'une des revendications de procédé précédentes,
**caractérisé en ce que**
un mandrin rétractable (4) est chauffé par induction (120) dans le dispositif de réception (8) renfermé par un dispositif de traitement thermique (12) formé comme un ensemble de bobines d'induction (12) et est ainsi élargi, et que le processus de chauffage est régulé (160) en utilisant la température extérieure résultante
ou
qu'un mandrin rétractable (4) est refroidi (120) dans le dispositif de réception (8) renfermé par un dispositif de traitement thermique (12) formé comme une unité de refroidissement (12), et que le processus de refroidissement est régulé (160) en utilisant la température extérieure résultante.

13. Procédé selon l'une des revendications de procédé précédentes,
**caractérisé en ce que**
différents étalonnages/paramétrages, en particulier différents degrés d'émission ε, sont réglés pour plusieurs capteurs de température (16), et des mesures de plusieurs capteurs de température (16) sont comparées et/ou sont traitées ensemble et la température extérieure résultante est définie (140) sur cette base.

14. Procédé selon l'une des revendications de procédé précédentes,
**caractérisé en ce que**
un signal d'un seul et même capteur de rayonnement (62) est évalué de manière différente.

15. Procédé selon l'une des revendications de procédé précédentes,
**caractérisé en ce que**
un étalonnage/paramétrage ou réglage pour au moins un capteur de température (16) sont mis en œuvre (180) en utilisant une mesure du deuxième capteur d'un autre type (62) ou l'utilisation d'une mesure du deuxième capteur d'un autre type (62) permet de définir (180) la manière selon laquelle la température extérieure résultante est définie (140), en particulier à partir des mesures de plusieurs capteurs de température (16).

16. Appareil (2) de traitement thermique, en particulier de chauffage par induction ou de refroidissement, de mandrins rétractables (4) pour des outils à manche (6), en particulier appareil de frettage (2) ou appareil de refroidissement (2) ou appareil de frettage avec appareil de refroidissement (2), avec un dispositif de réception (8), en particulier une ouverture de réception (8), pour recevoir un mandrin rétractable (4), une unité de traitement thermique (12) renfermant, en particulier de manière concentrique, le dispositif de réception (8) par rapport à un axe central (10), en particulier un ensemble de bobines d'induction (12) ou une unité de refroidissement (12), et une unité de mesure (14) pour mesurer, en particulier sans contact, la température du mandrin rétractable (4),
**caractérisé en ce que**
l'unité de mesure (14) comporte un pyromètre à quotient (30).
